# EUROPEAN PATENT SPECIFICATION

(11) **EP 0 408 880 B1**
(45) Date of publication and mention of the grant of the patent: **19.01.1994**
(21) Application number: 90110458.8
(22) Date of filing: 20.07.1990
(51) Int. Cl.: F02B 27/00, F02M 35/10

(54) **An air intake device for an internal combustion engine**
Eine Luftansaugvorrichtung für eine Brennkraftmaschine
Un dispositif d'aspiration d'air pour un moteur à combustion interne

(30) Priority: 21.07.1989 JP 190147/89; 27.09.1989 JP 253178/89
(43) Date of publication of application: 23.01.1991
(73) Proprietor: YAMAHA HATSUDOKI KABUSHIKI KAISHA, Iwata-shi Shizuoka-ken, 438 (JP)
(72) Inventor: Amano, Junkichi, Shizuoka-ken (JP); Murakami, Masashi, Shizuoka-ken (JP)
(74) Representative: Hauck, Hans, Dipl.-Ing.

(56) References cited:
- EP-A- 0 294 083
- EP-A- 0 335 413
- EP-A- 0 355 960
- GB-A- 2 160 264
- GB-A- 2 174 454
- US-A- 4 819 588
- PATENT ABSTRACTS OF JAPAN vol. 7, no. 106 (M-213)(1251) 10 May 1983,& JP-A-58 28584 (TOYOTA JIDOSHA KOGYO K.K.) 19 February 1983
- PATENT ABSTRACTS OF JAPAN vol. 12, no. 120 (M-685)(2967) 14 April 1988, & JP-A-62 247120 (MAZDA MOTOR CORP.) 28 October 1987

## Description

The present invention relates to an air intake device for an internal combustion engine.

Conventional air intake devices for internal combustion engines provide a surge tank and inlet pipes both mounted atop the engine. Published Japanese utility model application 61-76119 discloses a surge tank including inlet pipes which surround the central surge tank in a circular fashion. The assembly is mounted aside the engine. EP-A-0 355 960 (Prior art according to Article 54(3)EPC) shows a bipartite plenum with the second pipe portions intersecting the upper cross-sectional area of the plenum while the first U-shaped pipe portions including valve members are integrated in the lower portion of the plenum.

It is an object of the present invention to provide an air intake system which is compact, has high rigidity and needs little space to fit in the engine compartment of modern vehicles. It is an additional object to provide an air intake system allowing to easily change the length of the inlet pipes.

The object of the present invention is solved by an air intake device in accordance with the features of claim 1.

Additional features are claimed in the subclaims.

According to the invention the arrangement of the integrated pipe portion including the surge tank and the U-shaped pipe portions result in a compact assembly which fits aside the engine where little space is available. Particularly, the top of the surge tank is below the top of the cylinder head. As the surge tank extends atop the inlet pipes, the heat dissipation of the intake air is increased and the intake air temperature is reduced thus increasing the engine efficiency. The surge tank may form an integral structure with a further pipe portion connecting the U-shaped pipe portion to the inlet ports of the cylinder head. However, the second pipe portion referred to must be not necessarily integrated with the surge tank which may be located for example below the second pipe portion. The suspending U-shaped portions of the inlet pipes may be removeably connected to the surge tank and second pipe portion so that the length of the air intake passage can be easily changed by providing a number of U-shaped portions of different lengths.

Additional advantages and benefits of the present invention will become apparent upon reading of the description of the preferred embodiments taken in conjunction with the accompaning drawing.
Figure 1 is a schematic side view of an engine including an air intake device according to the invention,
Figure 2 is an enlarged transverse section view of the air intake device according to Figure 1,
Figure 3 is a top view of the assembly with parts shown in section view,
Figure 4 is a transverse sectional view of a further embodiment of the air intake device and
Figure 5 is a top view of the engine and the embodiment shown in Figure 4,
Figure 6 is a front view partially in section of a still further embodiment of the present invention,
Figure 7 a side view of the assembly shown in Figure 6,
Figure 8 a top sectional view of the air intake device along the line III-III in Figure 7,
Figure 9 is a view along the line IV-IV of Figure 6,
Figure 10 is a sectional view along line V-V of Figure 8 and
Figure 11 is a sectional view along the line VI-VI of Figure 8.

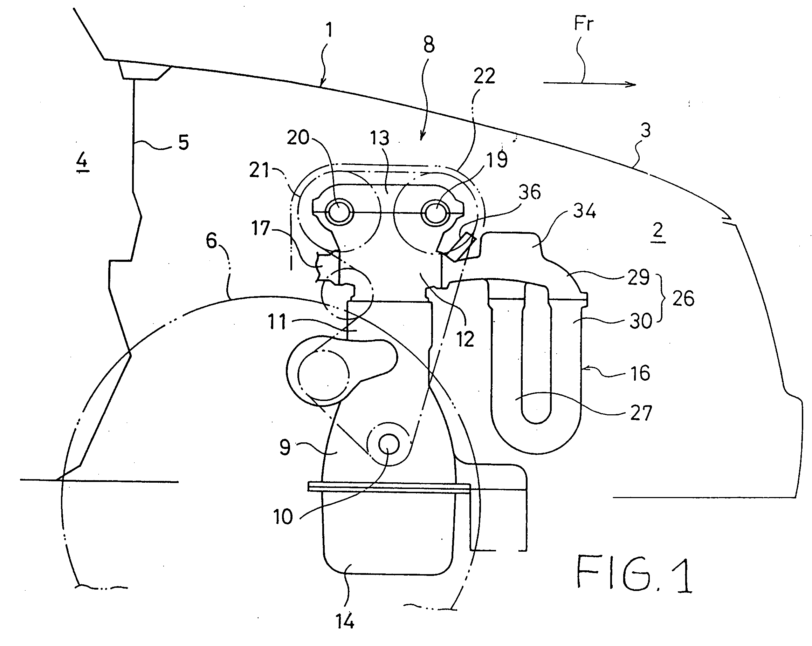

Referring now in detail to the drawings a first embodiment of the present invention is shown in Figure 1 schematically illustrating a body 1 of a vehicle moving in the direction of the arrow Fr. An engine compartment 2 is covered by a hood 3 gradually sloping down towards the front of the vehicle. An engine compartment 2 and a passenger compartment 4 are partitioned by a dash panel 5. The reference numeral 6 indicates a front wheel. The engine compartment 2 accomodates an internal combustion engine 8 which is transverse installed. The engine 8 is a four-cycle engine with four cylinders in line.

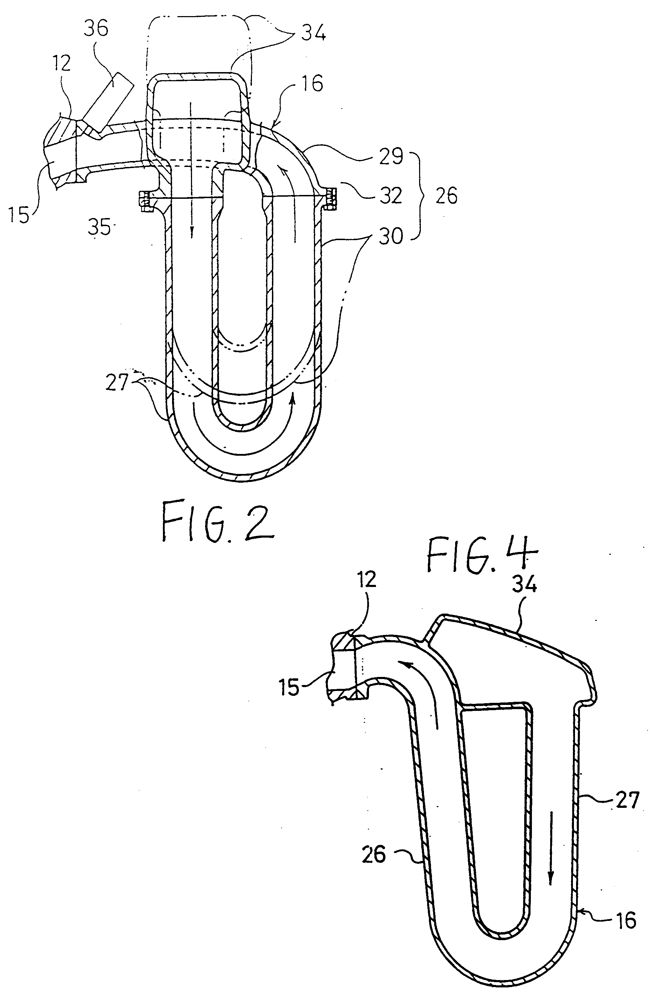

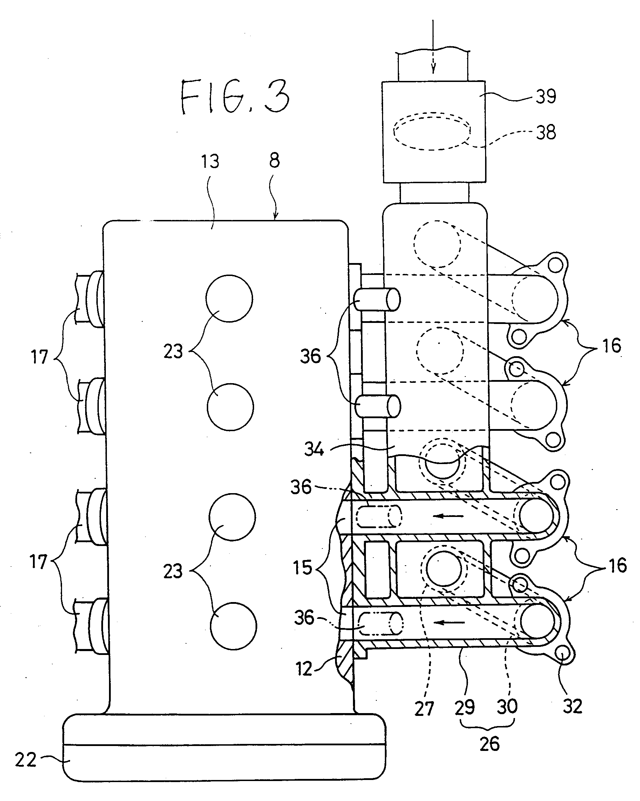

The engine 8 comprises among other components a crankcase 9, a crank shaft 10, cylinders 11, a cylinder head 12, a head cover 13, an oil pan 14, inlet ports 15 (Figure 2), an air intake device 16, exhaust pipes 17, a cam shaft 19 for the inlet valves not shown, a cam shaft 20 for the exhaust valves not shown, a belt drive 21 encased in a cover 22 and spark plugs 23 for each cylinder (Figure 3).

The air intake device 16 comprises 4 pipes 26, one pipe each for every inlet port 15 and a surge tank 34 common to all pipes 26. Each pipe 26 comprises a first U-shaped portion 27 and 30 and a second pipe portion 29 which is integrated with the surge tank in this embodiment of the invention.

As shown in detail in Figure 2 both sections 27 and 30 of the U-shaped portion are secured by bolts 32 and 35 to the integrated portion 29. As further shown the integrated portion 29 of each pipe 26 extends substantially horizontal and sidewardly of the cylinder head 12. The integrated portion 29 intersects the surge tank 34 and is curved downwardly outside the surge tank 34 opening into the section 30 of the U-shaped portion of which both pipe sections 27 and 30 are located substantially vertical and parallel to each other.

The surge tank 34 including the integrated pipe portions 29 is preferrably an integral aluminum casting from which the U-shaped portion suspend. As shown in Figure 2 the surge tank 34 has a somewhat rectangular cross section, the lower part of which accomodates the integrated portions 29 whereas the upper part extends above the pipe portions 29, but is still below the upper edge of the cover 22 corresponding to the top of the engine 8 as shown in Figure 1.

As the top view of Figure 3 shows the integrated portions 29 of the inlet pipes extend normally with respect to the length axis of the engine 8 and the inner section 27 of the U-shaped portion opens into the surge tank 34 inbetween the pipe portions 29 resulting in an angled disposition of the U-shaped portion 27 and 30 with respect to the axis of the pipe portion 29. The surge tank 34 receives air through a valve 39 incorporating a throttle 38. From the surge tank 34 the air enters the U-shaped portion 27 and 30 and then the pipe portion 29. A fuel injection valve 36 is mounted to the pipe portion 29 in front of the inlet port 15.

Turning again to Figure 1, the artisan will realize that the compact arrangement of the air intake device 16 allows the assembly to easily fit within the space provided for in the engine compartment 2 below the hood 3. As the horizontal pipes 29 and the surge tank 34 are formed as an integral body with the horizontal pipe sections 29 intersecting the lower cross sectional portion of the surge tank 34 the assembly is compact as well as has high strength and stiffness.

According to an alternative embodiment shown in dotted lines in Figure 2, the surge tank 34 may be placed above the integrated pipe portions 29 when space allows it. Even with a two-cycle engine having no valves the surge tank 34 may be located to fit in the space between the integrated pipe portions 29 and the top of the cylinder head.

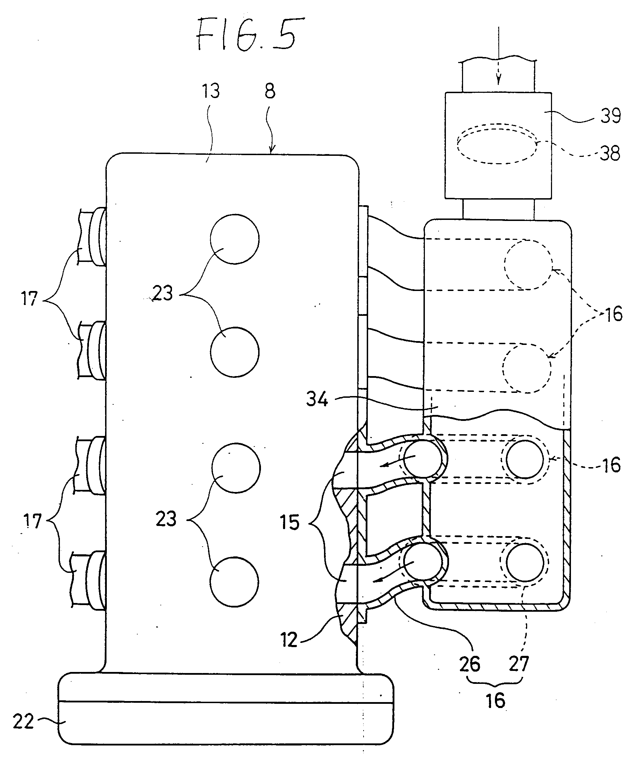

Figures 4 and 5 show another embodiment of the present invention. Since the flow of air through the U-shaped portion 27, 30 is reversed the integrated pipe portion 29 extends between the inlet port 15 and the surge tank 34 which is placed sidewards of the pipe sections 29. The complete structure including the U-shaped portions 27, 30, the pipe portions 29 and the surge tank 34 is preferrably formed as an integral casting to increase the stiffness and rigidity. The assembly shown is unique in compactness.

The U-shaped portions 27, 30 may be replaced by any U-shaped portions of different length as shown in dotted lines in Figure 2 to fulfill different needs of the air intake system.

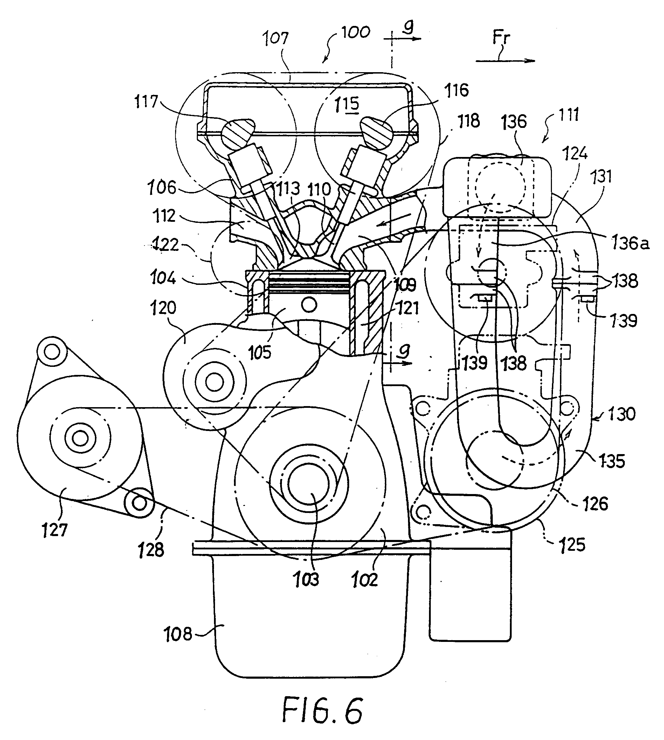

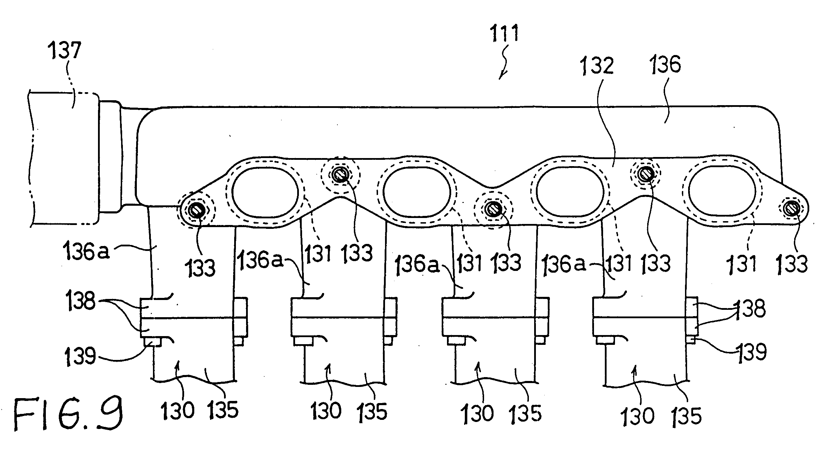

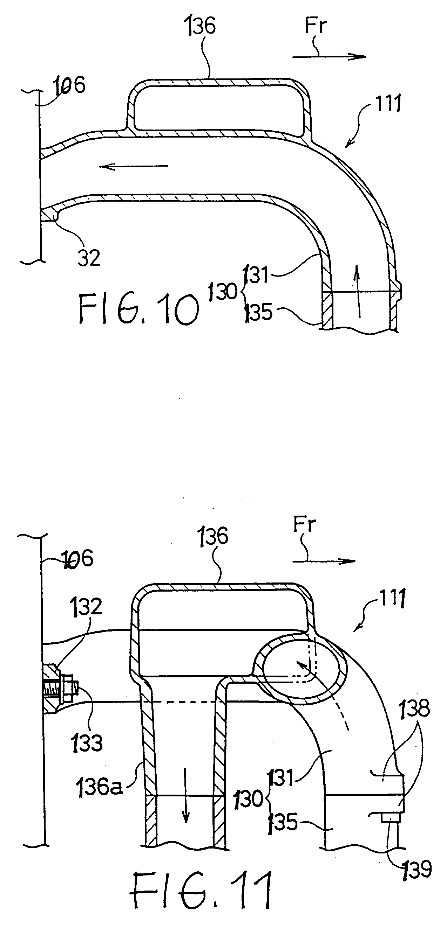

A still further embodiment of the invention is shown in Figures 6 to 11. A four-cycle engine 100 including 4 cylinders in line is installed in an engine compartment of an automotive vehicle (not shown). The arrow Fr points to the front of the vehicle. The engine 100 comprises a crankcase 102, 4 cylinders 104 including pistons 105, a cylinder head 106 including a head cover 107, an oil pan 108, further inlet ports 109 facing towards the front side of the vehicle, inlet valves 110 and an air intake device 111 facing alike towards the front side of the vehicle. The engine further comprises exhaust ports 112, exhaust valves 113, a cam shaft casing 115 accomodating cam shafts with cams 116 and 117, and a belt drive 118 for driving the cam shafts, an idler wheel 122 and a pump 120 for pumping cooling water through the cooling system 121 of the engine. A further belt 126 drives an oil pump 124 for a power steering system and a compressor 125 for an air-conditioning system. A belt 128 drives an alternator 127.

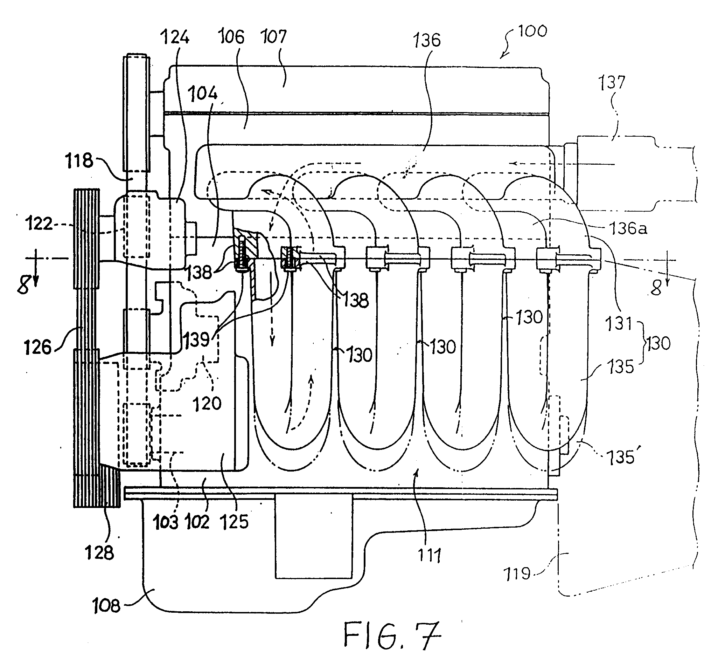

As shown in Figure 6 and 7 the air intake device 111 is formed as a compact and rigid structure allowing space for mounting accessories such as the oil pump 124 and the compressor 125 to be placed adjacent the air intake system which further fits substantially within the silhouette defined by the horizontal and vertical extensions of the pump and compressor.

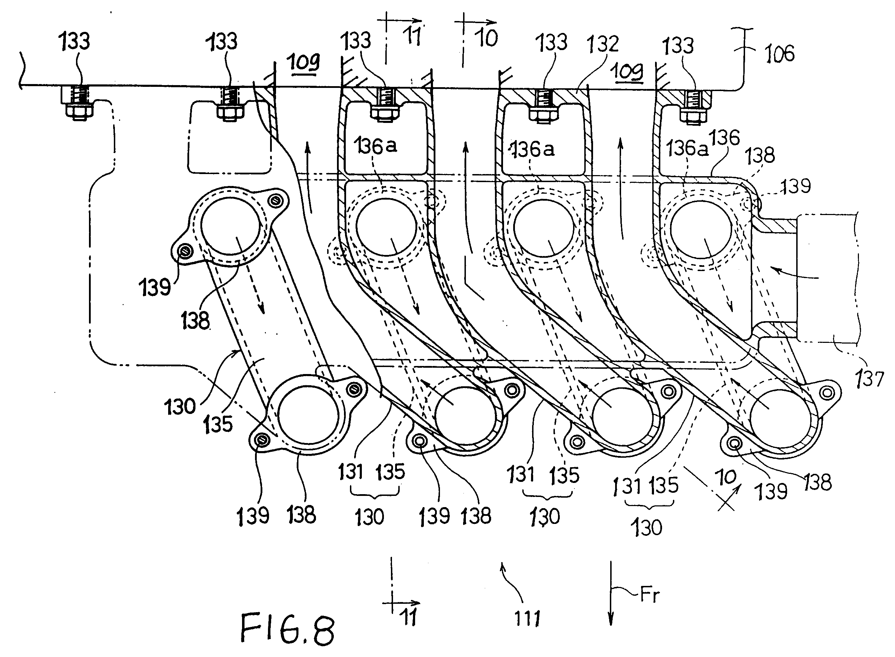

The air intake device 111 comprises a number of inlet pipes 130 of circular cross section equalling in number the number of the cylinders, each inlet pipe 130 comprising a pipe portion 131 mounted to the cylinder head and communicating with an inlet port 109, and a first U-shaped portion 135 suspending from the surge tank 136 and secured to the second pipe portion 131 as well as to a connecting pipe portion 136a extending from the bottom of the surge tank 136. The ends of the pipes sections are provided with flanges 138 which are connected together by bolts 139. A common flange 132 surrounding the integrated portions 131 is connected to the cylinder head 106 by bolts 133. As particularly shown in Figure 8 each integrated portion 131 extends substantially horizontal away from the inlet ports 109, first under a substantially right angle with respect to the length axis of the cylinder head 106 and then intersecting the lower portion of the surge tank 136 inbetween the connection pipes 136a at the bottom of the surge tank and then still within the surge tank turning around the adjacent connecting pipe 136a, protruding from the surge tank under an angle of approximately 45 degrees and extending beyond its associated connecting pipe 136a. Protruding the surge tank 136 the bent pipe portion 131 turns from the horizontal into a vertical plane, the flange 138 being connected to the U-shaped portion which extends under an angle with respect to the length axis of the engine. Again the integrated pipe portions 131 and the surge tank 136 including the connecting pipes 136a are integrally formed, preferrably as an aluminum casting. The upper portion of the surge tank 136 extends above the integrated portions 131 to facilitate cooling. The U-shaped portions 135 can be molded by plastic material for reduced weight. The U-shaped portions are easily exchangeable to fit their length to different needs. The intake air passing a throttle valve 137 enters the surge tank 136 and flows through then connecting pipes 136a through the U-shaped pipe portions 131 and from there through the integrated pipe portions 131 into the inlet ports 109.

## Claims

1. An air intake device (16,111) for an internal combustion engine (8,100) comprising an elongated surge tank (34,136) extending along the inlet port side of the engine, further comprising a number of inlet piles (26,130) each one connecting an inlet port (15,109) to said surge tank (34,136) for delivering air from said surge tank through each of said inlet pipes (26,130) to an associated inlet port (15,109), each inlet pipe (26,130) comprising a first pipe portion (27,30,135) which is U-shaped extending below said surge tank (34,136) and connecting an opening in the bottom of said surge tank to a second pipe portion (29, 131) opening into said inlet port of the engine, wherein the second pipe portion (29,131) intersects the surge tank (34,136) in the lower cross-sectional area of the surge tank.

2. The air intake device of claim 1, wherein the second pipe portion (29,131) extends substantially horizontal.

3. The air intake device of claim 1 or 2, wherein the top of the surge tank (34,136) is located substantially below the top of the cylinder head.

4. The air intake device of one of claims 1 to 3, wherein the second pipe portion (29, 131) is integrated with the surge tank (34, 136).

5. The air intake device of one of claims 1 to 4, wherein the ends of the second pipe portion adjacent the inlet ports terminate in a common flange (132) to be mounted on the cylinder head (12,106).

6. The air intake device of one of claims 1 to 5, wherein a fuel injection valve (36) each is provided at the second pipe portions adjacent the inlet port (15,109).

7. The air intake device of one of claims 1 to 6, wherein the openings in the bottom of the surge tank are provided inbetween said second pipe portions (29,131).

8. The air intake device of one of claims 1 to 7, wherein the second portion (29,131) is connected to said U-shaped portion beyond the surge tank.

9. The air intake device of one of claims 1 to 8, wherein the second portion (29) extends substantially rectangular sidewards from the cylinder head (12) (Fig. 3).

10. The air intake device of one of claims 1 to 8, wherein the second portion (131) is curved towards a front end of the cylinder head (106) (Fig. 8).

11. The air intake device of one of claims 1 to 10, wherein the U-shaped portions (26,27,135) are removably connected to the second portions (29,131) and to connecting pipe sections (136a) of the surge tank (34,136).

12. The air intake device of one of claims 1 to 11, wherein the pipe sections of the U-shaped portions (26,27, 135) are substantially parallel to each other and parallel to the side wall of the cylinder head (12,106).

13. The air intake device of one of claims 1 to 6, wherein the openings in the bottom of the surge tank are provided outward of said second pipe portions (29) (Fig. 4).

14. The air intake device of claim 13, wherein the surge tank (34), the U-shaped portion (26,27) and the second portion (29) are an integrally molded aluminium casting.

## Patentansprüche

1. Lufteinlaßvorrichtung (16, 111) für eine Brennkraftmaschine (8, 100) mit einem länglichen Ausgleichstank (34, 136), der sich längs der Einlaßseite des Motors erstreckt, ferner mit mehreren Einlaßrohren (26, 130), von denen jedes einen Einlaßkanal (15, 109) mit dem Ausgleichstank (34, 136) verbindet, um Luft aus dem Ausgangstank durch jedes der Einlaßrohre (26, 130) zu einem zugehörigen Einlaßkanal (15, 105) zu führen, wobei jeder Einlaßkanal (26, 130) einen ersten Rohrabschnitt (37, 30, 135) aufweist, der U-förmig unterhalb des Ausgleichstanks (34, 136) verläuft und eine Öffnung im Boden des Ausgleichstanks mit einem zweiten Rohrabschnitt (29, 131) verbindet, der in den Einlaßkanal des Motors mündet, wobei der zweite Rohrabschnitt (29,131) den Ausgleichstank (34,136) im unteren Querschnittsbereich des Ausgleichstanks durchsetzt.

2. Lufteinlaßvorrichtung nach Anspruch 1, wobei der zweite Rohrabschnitt (29,131) im wesentlichen horizontal verläuft.

3. Lufteinlaßvorrichtung nach Anspruch 1 oder 2, wobei die Oberseite des Ausgleichstanks (34,136) im wesentlichen unterhalb der Oberseite des Zylinderkopfes liegt.

4. Lufteinlaßvorrichtung nach einem der Ansprüche 1 bis 3, wobei der zweite Rohrabschnitt (29,131) an dem Ausgleichstank (34,136) angeformt ist.

5. Lufteinlaßvorrichtung nach einem der Ansprüche 1 bis 4, wobei die Enden des zweiten Rohrabschnitts neben den Einlaßkanälen in einem gemeinsamen Flansch (132) endigen, der am Zylinderkopf (12,106) montiert wird.

6. Lufteinlaßvorrichtung nach einem der Ansprüche 1 bis 5, wobei ein Brennstoffeinspritzventil (36) an den zweiten Rohrabschnitten neben dem Einlaßkanal (15,109) vorgesehen ist.

7. Lufteinlaßvorrichtung nach einem der Ansprüche 1 bis 6, wobei die Öffnungen im Boden des Ausgleichstanks zwischen den zweiten Rohrabschnitten (29,131) vorgesehen sind.

8. Lufteinlaßvorrichtung nach einem der Ansprüche 1 bis 7, wobei der zweite Abschnitt (29,131) jenseits des Ausgleichstanks an den U-förmigen Abschnitt angeschlossen ist.

9. Lufteinlaßvorrichtung nach einem der Ansprüche 1 bis 8, wobei der zweite Abschnitt (29) im wesentlichen rechtwinklig seitlich vom Zylinderkopf (12) verläuft (Fig. 3).

10. Lufteinlaßvorrichtung nach einem der Ansprüche 1 bis 8, wobei der zweite Abschnitt (131) auf ein Vorderende des Zylinderkopfes (106) zu gekrümmt ist (Fig. 8).

11. Lufteinlaßvorrichtung nach einem der Ansprüche 1 bis 10, wobei die U-förmigen Abschnitte (26,27,135) lösbar an den zweiten Abschnitten (29,131) und an Verbindungsrohrstücke (136a) des Ausgleichstanks (34,136) angeschlossen sind.

12. Lufteinlaßvorrichtung nach einem der Ansprüche 1 bis 11, wobei die Rohrstücke der U-förmigen Abschnitte (26,27,135) im wesentlichen parallel zueinander liegen und parallel zur Seitenwand des Zylinderkopfs (12,106).

13. Lufteinlaßvorrichtung nach einem der Ansprüche 1 bis 6, wobei die Öffnungen im Boden des Ausgleichstanks außerhalb der zweiten Rohrabschnitte (29) vorgesehen sind (Fig. 4).

14. Lufteinlaßvorrichtung nach Anspruch 13, wobei der Ausgleichstank (34), der U-förmige Abschnitt (26,27) und der zweite Abschnitt (29) einstückig aus Aluminium gegossen sind.

## Revendications

1. Dispositif d'admission d'air (16, 111) destiné à un moteur à combustion interne (8, 100) comprenant un réservoir allongé d'égalisation de pression (34, 136) s'étendant le long du côté du passage d'admission du moteur, et comprenant en outre plusieurs tubulures d'admission (26, 130), reliant chacune un passage d'admission (15, 109) audit réservoir d'égalisation de pression (34, 136) afin d'amener de l'air depuis ledit réservoir d'égalisation de pression, à travers chacune desdites tubulures d'admission (26, 130) jusqu'à un passage d'admission associé (15, 109), chaque tubulure d'admission (26, 130) comprenant une première partie (27, 30, 135) de tubulure qui est configurée en U et s'étend au-dessous dudit réservoir d'égalisation de pression (34, 136) en reliant une ouverture ménagée dans le fond dudit réservoir d'égalisation de pression à une deuxième partie (29, 131) de tubulure s'ouvrant dans ledit passage d'admission du moteur, ladite deuxième partie (29, 131) de tubulure étant en intersection avec le réservoir d'égalisation de pression (34, 136) dans la zone inférieure de la section transversale dudit réservoir d'égalisation de pression.

2. Dispositif d'admission d'air selon la revendication 1, dans lequel ladite deuxième partie (29, 131) de tubulure s'étend sensiblement à l'horizontale.

3. Dispositif d'admission d'air selon la revendication 1 ou 2, dans lequel le haut du réservoir d'égalisation de pression (34, 136) est situé sensiblement au-dessous du haut de la tête de cylindre.

4. Dispositif d'admission d'air selon l'une des revendications 1 à 3, dans lequel la deuxième partie (29, 131) de tubulure est d'un seul tenant avec le réservoir d'égalisation de pression (34, 136).

5. Dispositif d'admission d'air selon l'une des revendications 1 à 4 dans lequel les extrémités, adjacentes aux passages d'admission, des deuxièmes parties de tubulure se terminent en une bride commune (132) à monter sur la culasse (12, 106).

6. Dispositif d'admission d'air selon l'une des revendications 1 à 5, dans lequel une vanne d'injection (36) de carburant est disposée sur chacune des deuxièmes parties de tubulure adjacentes aux passages d'admission (15, 109).

7. Dispositif d'admission d'air selon l'une des revendications 1 à 6, dans lequel les ouvertures ménagées dans le fond du réservoir d'égalisation de pression sont disposées entre lesdites deuxièmes parties (29, 131) de tubulure.

8. Dispositif d'admission d'air selon l'une des revendications 1 à 7, dans lequel la deuxième partie (29, 131) est reliée à ladite partie configurée en U au-dessous du réservoir d'égalisation de pression.

9. Dispositif d'admission d'air selon l'une des revendication 1 à 8, dans lequel la deuxième partie (29) s'étend latéralement sensiblement à angle droit à partir de la culasse (12) (Fig. 3).

10. Dispositif d'admission d'air selon l'une des revendications 1 à 8, dans lequel la deuxième partie (131) est incurvée vers une extrémité avant de la culasse (106) (Fig. 8).

11. Dispositif d'admission d'air selon l'une des revendications 1 à 10, dans lequel les parties configurées en U (26, 27, 135) sont reliées de façon amovible aux deuxièmes parties (29, 131) et à des sections (136a) de tubulure de connexion du réservoir d'égalisation de pression (34, 136).

12. Dispositif d'admission d'air selon l'une des revendications 1 à 11, dans lequel les sections de tubulure des parties configurées en U (26, 27, 135) sont sensiblement parallèles entre elles et parallèles à la paroi latérale de la culasse (12, 106).

13. Dispositif d'admission d'air selon l'une des revendications 1 à 6, dans lequel les ouvertures ménagées dans le fond du récipient d'égalisation de pression sont disposées à l'extérieur desdites deuxièmes parties (29) de tubulure (Fig. 4).

14. Dispositif d'admission d'air selon la revendication 13, dans lequel le réservoir d'égalisation de pression (34), la partie configurée en U (26, 27) et la deuxième partie (29) constituent une pièce en fonte d'aluminium coulée d'un seul tenant.
